# EUROPÄISCHE PATENTSCHRIFT

(11) **EP 1 138 842 B1**
(45) Veröffentlichungstag und Bekanntmachung des Hinweises auf die Patenterteilung: **23.07.2003**
(21) Anmeldenummer: 00810263.4
(22) Anmeldetag: 27.03.2000
(51) Int. Cl.: E04B 1/86, B23D 45/10

(54) **Verfahren zur Herstellung eines schallabsorbierenden plattenförmigen Elementes und Vorrichtung zur Durchführung des Verfahrens**
Method for producing a panel-like sound-absorbing element and apparatus for carrying out said method
Procédé de fabrication d'un élément insonorisant en forme de panneau et dispositif pour la mise en oeuvre du procédé

(43) Veröffentlichungstag der Anmeldung: 04.10.2001
(73) Patentinhaber: Mäder, Marco, 4612 Wangen b. Olten (CH)
(72) Erfinder: Mäder, Marco, 4612 Wangen b. Olten (CH); Ruch, Andreas, 4950 Huttwil (CH)
(74) Vertreter: BOVARD AG - Patentanwälte

(56) Entgegenhaltungen:
- EP-A- 0 150 500
- EP-A- 0 504 629
- DE-A- 4 041 496
- DE-A- 19 857 419
- GB-A- 1 351 093

## Beschreibung

Die vorliegende Erfindung bezieht sich auf ein Verfahren zur Herstellung eines schallabsorbierenden plattenförmigen Elementes gemäss dem Oberbegriff des Patentanspruchs 1 und eine Vorrichtung zur Durchführung des Verfahrens.

Derartige schallabsorbierende plattenförmige Elemente sind bekannt. Diese werden insbesondere für die Abdeckung von Decken und/oder Wänden von Räumen verwendet. Die eine Oberfläche dieser schallabsorbierenden plattenförmigen Elemente ist somit gegen das Innere des Raumes gerichtet und ist für Personen, die sich im Raum aufhalten, sichtbar, während die rückseitige Oberfläche gegen die Decke bzw. Wand des Raums gerichtet ist und für den Betrachter nicht sichtbar ist.

Aus der EP-B-0 504 629 ist ein derartiges schallabsorbierendes plattenförmiges Element bekannt. Dieses ist an der sichtbaren Oberfläche mit Nuten versehen, die parallel verlaufen. Die Rückseite des plattenförmigen Elementes ist mit Bohrungen versehen, die in den Grund der Nuten hineinragen und in diesem Bereich schlitzförmige Durchbrüche ergeben. Die Rückseite ist mit einer aus schallabsorbierendem Material bestehenden Matte belegt Dadurch wird der Schall, der durch die Durchbrüche gelangt, durch diese Matte absorbiert.

Das Anbringen der Bohrungen auf der Rückseite des plattenförmigen Elementes ist aufwendig. Da die Achsen der Bohrungen senkrecht zum plattenförmigen Element ausgerichtet sind, müsste, wenn mehrere Bohrungen miteinander angebracht werden sollten, um die Zeitdauer der Herstellung nicht massiv zu verlängern, ein kompliziertes mehrspindliges Werkzeug verwendet werden, das teuer in der Herstellung ist. Wenn ein grosser Ausstoss von schallabsorbierenden plattenförmigen Elementen erreicht werden soll, ist eine teure Maschinerie erforderlich, wenn mit einem einfachen Werkzeug gearbeitet werden soll, ist der Ausstoss gering, was sich in einem hohen Preis dieser schallabsorbierenden plattenförmigen Elemente niederschlägt.

Aus der EP-A-0 935 030 ist eine schallabsorbierende Platte bekannt, die im wesentlichen auf die gleiche Art hergestellt wird, wie die vorgängig beschriebene, wobei anstelle von Bohrern zum Anbringen der Ausnehmungen auf der Rückseite dieses plattenförmigen Elementes Fräswerkzeuge verwendet werden, wodurch schlitzförmige Vertiefungen eingearbeitet werden können.

Da auch diese Fräswerkzeuge bei der Bearbeitung des plattenförmigen Elementes mit ihrer Drehachse senkrecht zur Oberfläche dieses plattenförmigen Elementes ausgerichtet sind, entstehen hier die gleichen Nachteile, wie bei dem vorgängig beschriebenen Ausführungsbeispiel. Auch hier müsste, wenn eine hohe Produktivität erreicht werden will, ein Mehrspindelwerkzeug verwendet werden, das ebenfalls teuer in der Herstellung wäre.

Aus der DE-A-40 41 496 ist bekannt, bei einem Brennstoffzellenträger Durchströmöffnungen mit rotierenden Sägeblättern in der Mantelfläche anzubringen.

Eine Aufgabe der vorliegenden Erfindung besteht nun darin, ein Verfahren zur Herstellung von plattenförmigen schallabsorbierenden Elementen zu schaffen, das sich durch eine hohe Produktivität auszeichnet und mit welchem die schallabsorbierenden plattenförmigen Elemente kostengünstig hergestellt werden können.

Erfindungsgemäss erfolgt die Lösung dieser Aufgabe durch die im Anspruch 1 aufgeführten Merkmale.

Mit diesem erfindungsgemässen Verfahren werden die Ziele in einfacher Weise erreicht.

Eine vorteilhafte Ausgestaltung des Verfahrens besteht darin, dass das jeweilige plattenförmige Element schrittweise an der Welle vorbeigeführt wird und die Welle jeweils in der Stillstandphase des entsprechenden plattenförmigen Elementes gegen dieses zugestellt wird, die Vertiefungen eingefräst werden und die Welle wieder in den vom plattenförmigen Element abgestellten Zustand gebracht wird. Dadurch wird erreicht, dass die Lagerung der Welle und der Mechanismus zur Ausführung der Zu- und Abstellbewegung sehr einfach sind.

Das jeweilige plattenförmige Element kann aber auch kontinuierlich an der Welle vorbeigeführt werden, wobei die Welle während des Zustellens zum plattenförmigen Elemente im wesentlichen mit dem entsprechenden plattenförmigen Element mitläuft, die Vertiefungen eingefräst werden, die Welle in den vom plattenförmigen Element abgestellten Zustand gebracht und wieder in die Ausgangsposition zurückbewegt wird. Durch den kontinuierlichen Durchlauf des plattenförmigen Elementes können der Antrieb und die Steuerung für die Vorschubbewegung vereinfacht werden, die Durchlaufzeiten können verkürzt werden.

Eine weitere Aufgabe der Erfindung besteht darin, eine Vorrichtung zur Durchführung des Verfahrens zu schaffen, was erfindungsgemäss durch die Merkmale erreicht wird, die im Anspruch 6 aufgeführt sind.

Eine vorteilhafte Ausgestaltung der erfindungsgemässen Vorrichtung besteht darin, dass zwei Wellen vorgesehen sind, die in Vorschubrichtung des zu bearbeitenden plattenförmigen Elementes gesehen, hintereinander angeordnet sind, wobei der Abstand der Scheibenfräswerkzeuge auf beiden Wellen jeweils dem doppelten Abstand der Nuten entspricht und die Scheibenfräswerkzeuge der einen Welle zu den Scheibenfräswerkzeugen der anderen Welle um den Abstand der Nuten versetzt angeordnet sind. Dadurch kann eine grosse Anzahl von Durchbrüchen im Grund der Nuten des schallabsorbierenden plattenförmigen Elementes erreicht werden, wobei die Festigkeit der Platte trotzdem gewährleistet ist.

Eine weitere vorteilhafte Ausgestaltung der erfindungsgemässen Vorrichtung besteht darin, dass in der gleichen Vorrichtung eine weitere Welle vorgesehen ist, die mit weiteren Scheibenfräswerkzeugen ausgestattet ist und mit welchen in die auf der der mindestens einen Welle abgewandten sichtbaren Oberfläche des plattenförmigen Elementes die Nuten eingefräst werden können. Dadurch kann das schallabsorbierende plattenförmige Element in einem einzigen Arbeitsgang hergestellt werden.

Das erfindungsgemässe Verfahren und Vorrichtungen zur Durchführung des Verfahrens werden nachfolgend anhand der beiliegenden Zeichnung beispielhaft näher erläutert.

Es zeigt:
Fig. 1 in räumlicher Darstellung ein nach dem erfindungsgemässen Verfahren hergestelltes, schallabsorbierendes plattenförmiges Element, z.T. im Schnitt;
Fig. 2 eine Draufsicht auf die Rückseite des schallabsorbierenden plattenförmigen Elementes gemäss Fig. 1;
Fig. 3 eine Schnittdarstellung entlang Linie III-III gemäss Fig. 2;
Fig. 4 eine Draufsicht auf die sichtbare Oberfläche des schallabsorbierenden plattenförmigen Elementes gemäss Fig. 1;
Fig. 5 eine Schnittdarstellung entlang Linie V-V gemäss Fig. 4;
Fig. 6 eine schematische Darstellung einer Vorrichtung zur Durchführung des Verfahrens mit zustellbaren und abstellbaren Wellen mit Scheibenfräsem;
Fig. 7 in schematischer Darstellung eine Ansicht in Vorschubrichtung auf die Vorrichtung gemäss Fig. 6;
Fig. 8 eine schematische Darstellung einer weiteren Vorrichtung zur Durchführung des Verfahrens mit zustellbaren und abstellbaren sowie in Vorschubrichtung mitfahrenden Wellen mit Scheibenfräsern; und
Fig. 9 in schematischer Darstellung eine Ansicht in Vorschubrichtung auf die Vorrichtung gemäss Fig. 8.

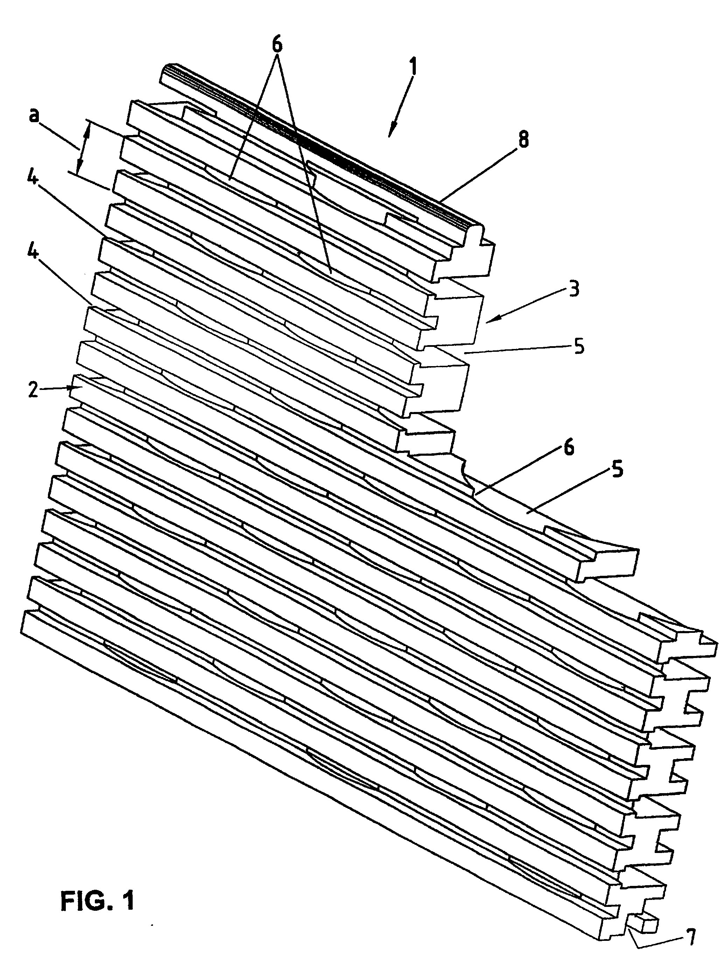

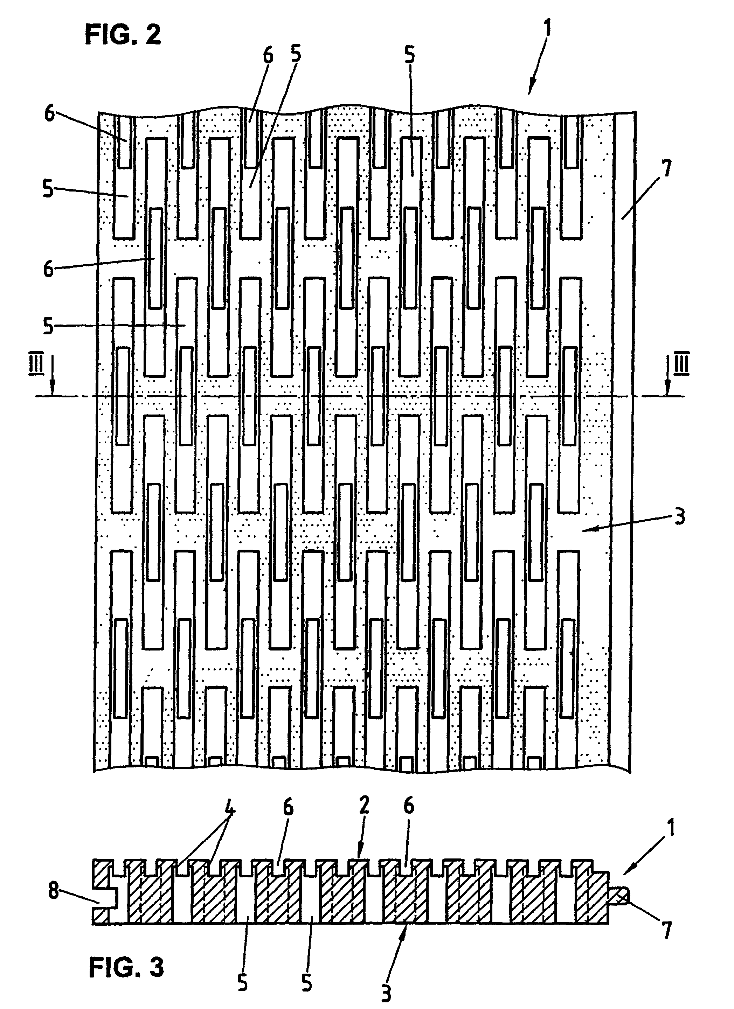

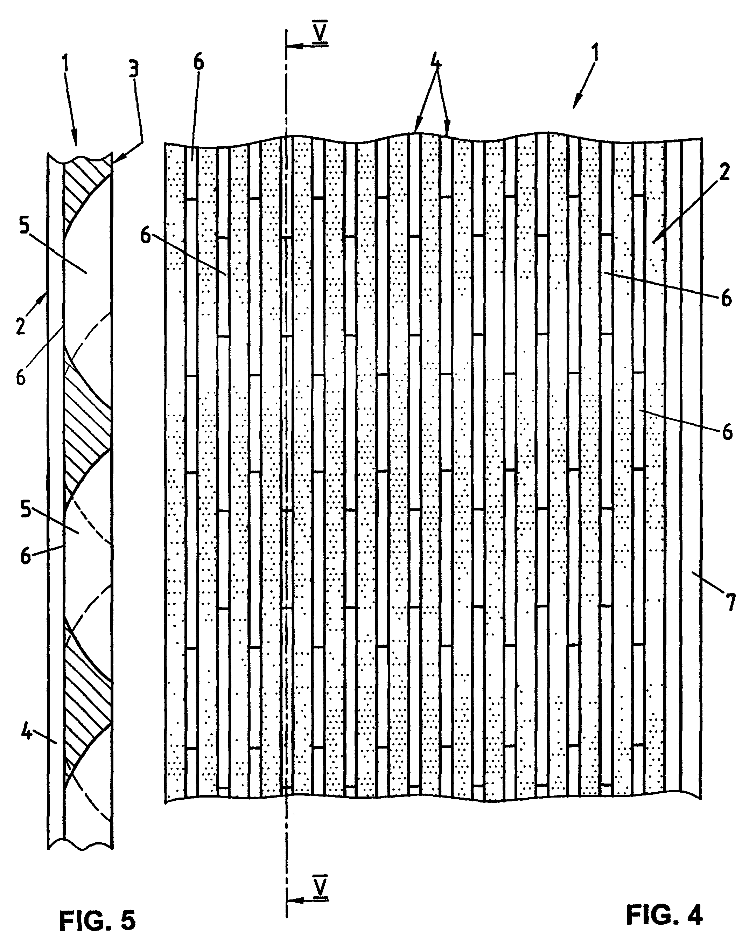

Wie aus den Fig. 1 bis 5 ersichtlich ist, weist das schallabsorbierende plattenförmige Element 1 eine sichtbare Oberfläche 2 und eine rückwärtige Oberfläche 3 auf. Diese schallabsorbierenden plattenförmigen Elemente 1 dienen beispielsweise zur Auskleidung von Räumen, wobei die sichtbare Oberfläche gegen den Innenraum gerichtet und von Personen, die sich im Raum befinden, gesehen werden kann, während die rückwärtige Oberfläche gegen die Wand bzw. die Decke des Raumes gerichtet ist. In die sichtbare Oberfläche 2 eingelassen sind parallel verlaufende Nuten 4. Diese Nuten 4 haben im vorliegenden Beispiel einen gegenseitigen Abstand a.

In die rückwärtige Oberfläche 3 sind Vertiefungen 5 angebracht. Diese Vertiefungen 5 werden, wie später noch gesehen wird, mit Scheibenfräswerkzeugen eingefräst. Diese Vertiefungen 5 werden jeweils gegenüberliegend den Nuten 4 angebracht, wobei die Eindringtiefe derart ist, dass im Bereich der Nuten 4 der Nutengrund durchbrochen wird und so schlitzförmige Durchbrüche 6 entstehen.

Diese plattenförmigen Elemente können aus irgend einem geeigneten Material hergestellt sein, beispielsweise aus Holz, insbesondere in Form von Pressspanplatten, wobei die sichtbare Oberfläche 2 mit einer dekorativen Schicht versehen sein kann, um die ästhetische Wirkung zu verbessern.

Die plattenförmigen Elemente 1 können an den Randbereichen mit Rillen 7 bzw. passenden Rippen 8 ausgestattet werden, so dass diese plattenförmigen Elemente 1 in bekannter und einfacher Weise aneinandergefügt werden können.

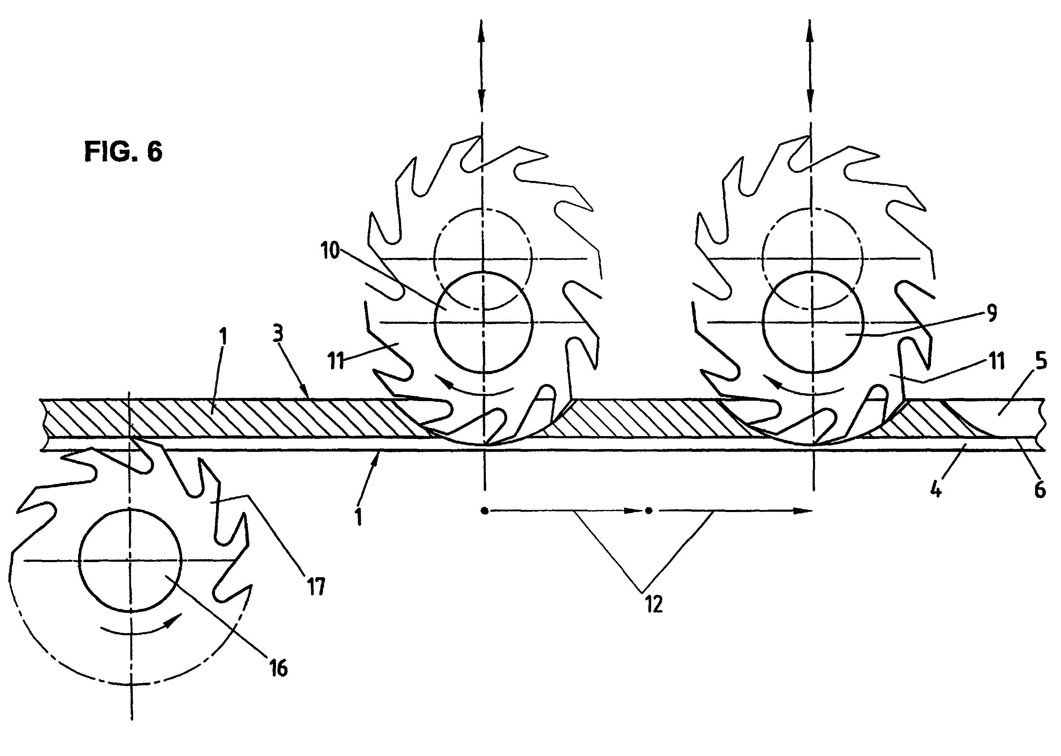

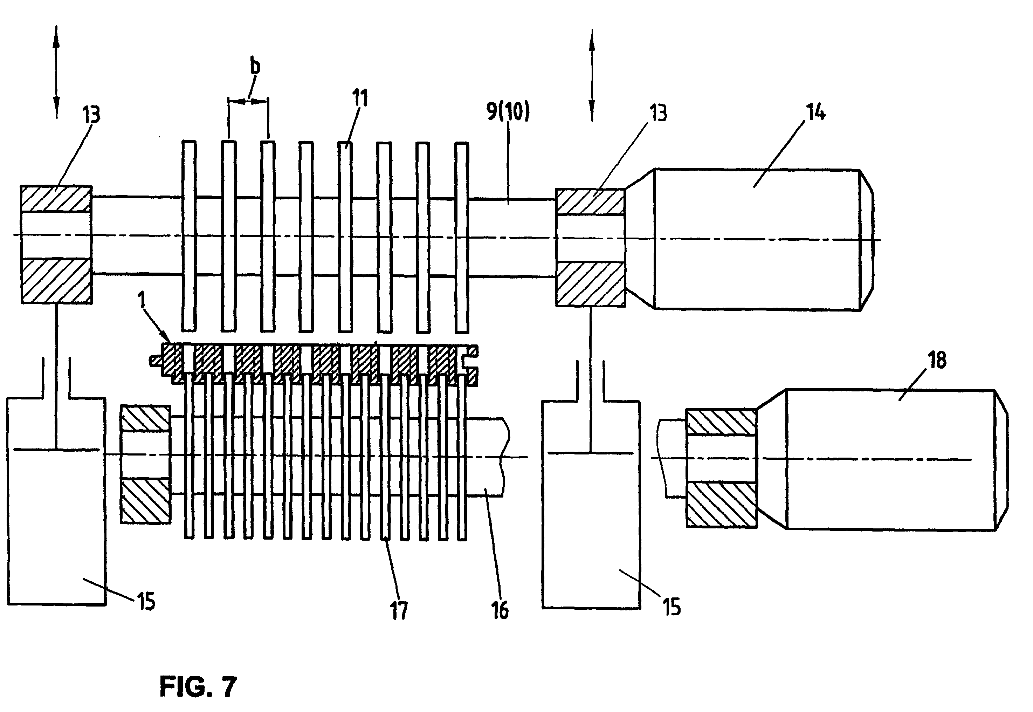

In den Fig. 6 und 7 ist in schematischer Weise eine Vorrichtung zum Anbringen der Vertiefungen in einem plattenförmigen Element ersichtlich. Auf zwei voneinander beabstandeten Wellen 9 und 10 sind jeweils Scheibenfräswerkzeuge 11 angeordnet Das zu bearbeitende plattenförmige Element 1 wird in Vorschubrichtung, dargestellt durch Pfeile 12, in bekannter Weise an den Wellen 9 und 10 vorbeigeführt, die rechtwinklig zur Vorschubrichtung stehen und parallel zur rückwärtigen Oberfläche 3 des plattenförmigen Elementes ausgerichtet sind.

Die Scheibenfräswerkzeuge 11 haben bei diesem Ausführungsbeispiel einen gegenseitigen Abstand b, der dem doppelten Abstand a entspricht, den die Nuten 4 voneinander haben. Hierbei sind die Scheibenfräswerkzeuge 11 der Welle 9 zu den Scheibenfräswerkzeugen 11 der Welle 10 um das Mass a versetzt, so dass Vertiefungen 5 in der Form angebracht werden können, wie sie aus den Fig. 1 bis 5 ersichtlich sind.

Die Wellen 9 und 10 sind an ihren beiden Randbereichen jeweils in einem Lager 13 drehbar gelagert. Die Wellen 9 und 10 sind jeweils über einen Antriebsmotor 14 rotierend antreibbar. Die Lager 13 sind jeweils mit einem Linearantrieb 15 verbunden, mit welchem die Welle 9 bzw. 10 mit den darauf befestigten Scheibenfräswerkzeugen 11 von einer abgestellten Position, dargestellt in Fig. 7, in eine zugestellte Position bringbar sind, wie dies in Fig. 6 ersichtlich ist.

Zur Herstellung eines schallabsorbierenden plattenförmigen Elementes 1 wird dieses in bekannter Weise mittels einer nicht dargestellten Vorschubeinrichtung in den Bereich der Wellen 9 und 10 bzw. der Scheibenfräswerkzeuge 11 gebracht. Diese befinden sich in der abgestellten Position. Diese können dann zugestellt werden, wodurch die Vertiefungen 5 ausgefräst werden. Danach werden diese wieder in die abgestellte Position gebracht, das plattenförmige Element 1 wird um einen Schritt vorgeschoben, schematisch dargestellt durch die Pfeile 12. Durch Wiederholung dieses Vorgangs kann das ganze plattenförmige Element 1 mit Vertiefungen 5 versehen werden.

Im gleichen Arbeitsgang könnten auch die Nuten 4 in das plattenförmige Element 1 eingefräst werden, wozu auf der Seite der sichtbaren Oberfläche 2 des plattenförmigen Elementes 1 eine weitere Welle 16 vorgesehen ist, die mit weiteren Scheibenfräswerkzeugen 17 ausgestattet ist Auch diese ist über einen Antriebsmotor 18 rotierend antreibbar.

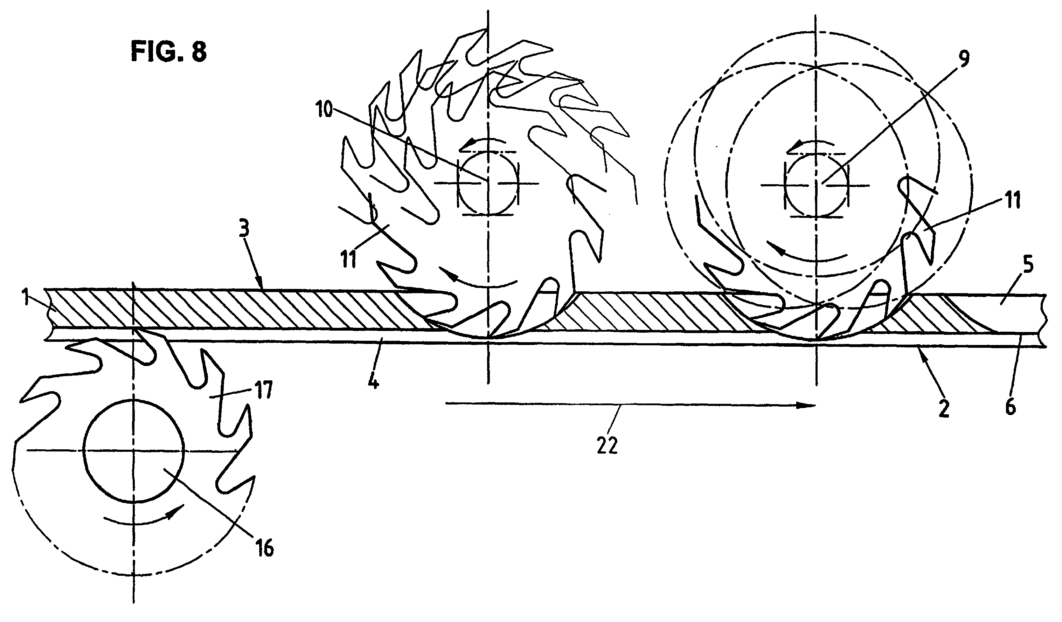

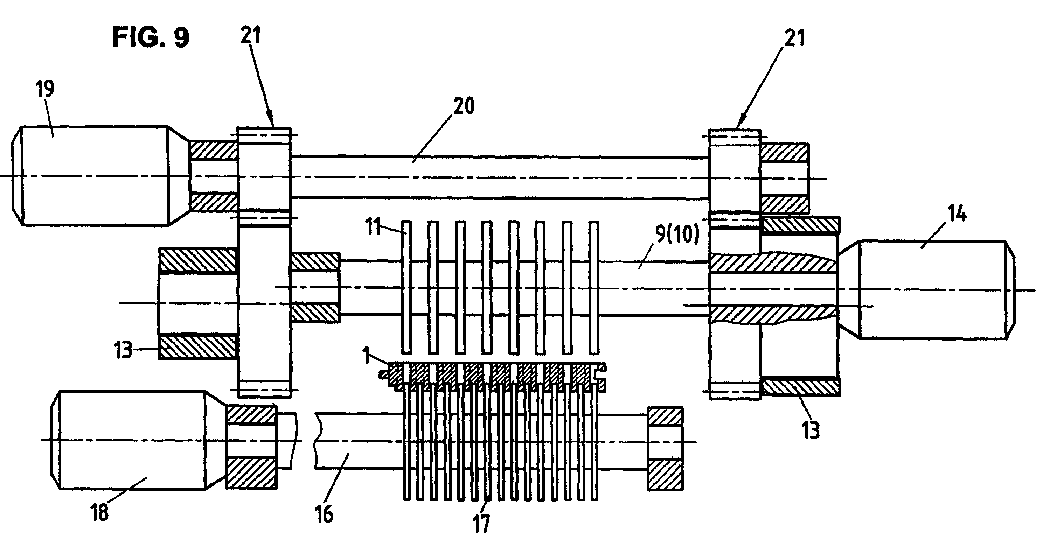

In den Fig. 8 und 9 ist eine weitere Vorrichtung dargestellt, mit welcher ein schallabsorbierendes plattenförmiges Element 1 hergestellt werden kann. Diese Vorrichtung weist im wesentlichen denselben Aufbau auf wie die vorgängig beschriebene, nämlich mit den Wellen 9 und 10, den darauf angebrachten Scheibenfräswerkzeugen 11 und der weiteren Welle 16 mit den weiteren Scheibenfräswerkzeugen 17, die jeweils rotierend antreibbar sind. Im Gegensatz zu der vorhergehend beschriebenen Vorrichtung kann mit der hier beschriebenen Vorrichtung das plattenförmige Element 1 kontinuierlich an den Wellen 9 und 10 mit den entsprechenden Scheibenfräswerkzeugen 11 bzw. der weiteren Welle 16 mit den weiteren Scheibenfräswerkzeugen 17 vorbeigeführt werden. Die Nuten 4 auf der sichtbaren Oberfläche 2 des plattenförmigen Elementes 1 werden kontinuierlich in bekannter Weise eingefräst, die Wellen 9 und 10 sind bezüglich der Lager 13, in welchen diese drehbar gehalten sind, exzentrisch angeordnet. Über einen Hilfsmotor 19 lässt sich eine Antriebswelle 20 rotierend antreiben, die Rotationsbewegung wird über Zahnradgetriebe 21 auf die Welle 9 bzw. 10 übertragen, die Welle 9 bzw. 10 führt somit um die durch die Lager 13 gebildete Lagerachse eine kreisförmige Bewegung aus, wie dies aus Fig. 8 ersichtlich ist. Durch diese kreisförmige Bewegung werden die Wellen 9 und 10 mit den darauf befestigten Scheibenfräswerkzeugen nicht nur von einer abgestellten Position in eine zugestellte Position gebracht, die Scheibenfräswerkzeuge 11 sind mit dem kontinuierlich vorgeschobenen plattenförmigen Element in der zugestellten Position im wesentlichen mitlaufend. Dadurch kann das plattenförmige Element 1 kontinuierlich vorgeschoben werden, wie dies durch Pfeil 22 (Fig. 8) dargestellt ist.

Die beiden als Ausführungsbeispiele dargestellten Vorrichtungen sind jeweils mit zwei Wellen 9 und 10 mit den entsprechend angebrachten Scheibenfräswerkzeugen ausgestattet. Selbstverständlich ist es auch denkbar, die Vorrichtung nur mit einer Welle auszurüsten, wobei die Scheibenfräswerkzeuge dann einen Abstand voneinander haben könnten, der dem Nutenabstand a entspricht. Die Vertiefungen 5 würden dann jeweils alle in einer Reihe liegen. Hierbei könnten sowohl das schrittweise Vorschieben des plattenförmigen Elementes 1 wie auch das kontinuierliche Vorschieben des plattenförmigen Elementes 1 verwendet werden, jeweils ausgerüstet wie beispielsweise die Welle 9 im beschriebenen ersten und zweiten Ausführungsbeispiel der Vorrichtung.

Selbstverständlich wäre es auch denkbar, die Nuten 4 in einer separaten Vorrichtung im plattenförmigen Element 1 anzubringen, oder bereits mit Nuten 4 versehene plattenförmige Elemente 1 zu verwenden, so dass auf die weitere Welle 16 in den beschriebenen Vorrichtungen verzichtet werden könnte.

Es wäre auch denkbar, die Vorrichtung mit mehr als zwei Wellen mit entsprechenden Scheibenfräswerkzeugen auszustatten, wobei der Abstand der Scheibenfräswerkzeuge untereinander entsprechend vergrössert werden könnte.

In den vorgängig beschriebenen Ausführungsbeispielen weisen die Vertiefungen 5 eine grössere Breite auf als die Nuten 4. Selbstverständlich können die Breiten gleich sein, es wäre auch denkbar, die Nuten 4 mit einer grösseren Breite anzubringen als die Vertiefungen 5.

In den vorgängig beschriebenen Ausführungsbeispielen weist jede Nut 4 des schallabsorbierenden plattenförmigen Elementes schlitzförmige Durchbrüche 6 auf. Auch hier wäre denkbar, einzelne oder jeweils eine Anzahl von Nuten nicht mit entsprechenden schlitzförmigen Durchbrüchen 6 zu versehen, wozu beispielsweise auf den Wellen 9 bzw. 10 die entsprechenden Scheibenfräswerkzeuge 11 entfernt werden könnten. Somit wäre es auch denkbar, nur einen Bereich eines schallabsorbierenden plattenförmigen Elementes mit Nuten 4 und/oder Vertiefungen 5 zur Bildung der schlitzförmigen Durchbrüche 6 anzubringen, wodurch das schallabsorbierende plattenförmige Element 1 in beliebiger Weise an die Anforderungen, die es erfüllen muss, angepasst werden kann.

## Patentansprüche

1. Verfahren zur Herstellung eines schallabsorbierenden, plattenförmigen Elementes (1), bei welchem die sichtbare Oberfläche (2) des plattenförmigen Elementes (1) mit im wesentlich parallel verlaufenden, voneinander beabstandeten Nuten (4) versehen wird und in die rückwärtige Oberfläche (3) Vertiefungen (5) angebracht werden, welche im Grund der Nuten (4) mit diesen zusammentreffen und Durchbrüche (6) gebildet werden, **dadurch gekennzeichnet, dass** zum Anbringen der Vertiefungen (5) das plattenförmige Element (1) an mindestens einer in einer Vorrichtung vorgesehenen Welle (9; 10) vorbeigeführt wird, die im wesentlichen parallel zu den Oberflächen (2, 3) des plattenförmigen Elementes (1) ausgerichtet ist und mit Scheibenfräswerkzeugen (11) bestückt ist, die einen gegenseitigen Abstand (b) haben, der im wesentlichen dem Abstand (a) der Nuten (4) entspricht, welche Welle (9; 10) rotierend angetrieben wird und zwischen Welle (9; 10) und plattenförmigem Element (1) zum Ausfräsen der in ihrer Längsausdehnung begrenzten Vertiefungen (5) eine relative Zustellbewegung soweit ausgeführt wird, bis der Grund der Nuten (4) durchbrochen wird und so die schlitzförmigen Durchbrüche (6) gebildet werden.

2. Verfahren nach Anspruch 1, **dadurch gekennzeichnet, dass** die rotierend angetriebene Welle (9; 10) mit den Scheibenfräswerkzeugen (11) zum Anbringen der Vertiefungen (5) gegen das plattenförmige Element (1) hin zugestellt wird, und dass danach die Welle (9; 10) vom plattenförmigen Element (1) weg bewegt wird.

3. Verfahren nach einem der Ansprüche 1 oder 2, **dadurch gekennzeichnet, dass** das jeweilige plattenförmige Element (1) schrittweise an der Welle (9; 10) vorbeigeführt wird und die Welle (9; 10) jeweils in der Stillstandphase des entsprechenden plattenförmigen Elementes (1) gegen dieses zugestellt wird, die Vertiefungen (5) eingefräst werden und die Welle (9; 10) wieder in den vom plattenförmigen Element (1) abgestellten Zustand gebracht wird.

4. Verfahren nach einem der Ansprüche 1 oder 2, **dadurch gekennzeichnet, dass** das jeweilige plattenförmige Element (1) kontinuierlich an der Welle (9; 10) vorbeigeführt wird und die Welle (9; 10) während des Zustellens im wesentlichen mit dem entsprechenden plattenförmigen Element (1) mitläuft, die Vertiefungen (5) eingefräst werden, die Welle (9; 10) in den vom plattenförmigen Element (1) abgestellten Zustand gebracht und wieder in die Ausgangsposition zurückbewegt wird.

5. Verfahren nach einem der Ansprüche 1 bis 4, **dadurch gekennzeichnet, dass** an der rückseitigen Oberfläche (3) des schallabsorbierenden Elementes (1) eine aus einem schallabsorbierenden Material bestehende Matte aufgelegt wird.

6. Vorrichtung zur Durchführung des Verfahrens gemäss einem der Ansprüche 1 bis 5, **dadurch gekennzeichnet, dass** das zu bearbeitende plattenförmige Element (1) an der mindestens einen Welle (9; 10) in einer Vorschubrichtung vorbeiführbar ist, dass die Welle (9; 10) im wesentlichen quer zur Vorschubrichtung des plattenförmigen Elementes (1) und im wesentlichen parallel zu deren Oberflächen (2, 3) rotierbar in mindestens einem Lager (13) gelagert ist und mit Scheibenfräswerkzeugen (11) bestückt ist, die den gegenseitigen Abstand (b) haben, der einem ganzzahligen Vielfachen des Abstandes (a) der Nuten (4) entspricht, und dass zwischen Welle (9; 10) und plattenförmigem Element (1) eine relative Zustellbewegung ausführbar ist und somit die Vertiefungen (5) ausfräsbar sind.

7. Vorrichtung nach Anspruch 6, **dadurch gekennzeichnet, dass** die mindestens eine Welle (9; 10) beidseitig in jeweils einem Lager (13) gehalten ist, welches Lager (13) mittels einem Linearantrieb (15) im wesentlichen senkrecht zur rückseitigen Oberfläche (3) des plattenförmigen Elementes (1) zu diesem hin und von diesem weg verschiebbar ist.

8. Vorrichtung nach Anspruch 6, **dadurch gekennzeichnet, dass** die mindestens eine Welle (9; 10) beidseitig in jeweils einem Lager (13) gehalten ist, welches Lager (13) in Vorschubrichtung und entgegengesetzt dazu sowie senkrecht zur Oberfläche (3) des plattenförmigen Elementes (1) zu diesem hin und von diesem weg verschiebbar ist.

9. Vorrichtung nach einem der Ansprüche 6 bis 8, **dadurch gekennzeichnet, dass** zwei Wellen (9, 10) vorgesehen sind, die in Vorschubrichtung gesehen hintereinander angeordnet sind, und dass der Abstand (b) der Scheibenfräswerkzeuge (11) auf beiden Wellen (9 und 10) jeweils dem doppelten Abstand (a) der Nuten (4) entspricht und die Scheibenfräswerkzeuge (11) der einen Welle (9) zu den Scheibenfräswerkzeugen (11) der anderen Welle (10) um den Abstand (a) der Nuten (4) versetzt angeordnet sind.

10. Vorrichtung nach einem der Ansprüche 6 bis 9, **dadurch gekennzeichnet, dass** eine weitere Welle (16) vorgesehen ist, die mit weiteren Scheibenfräswerkzeugen (17) ausgestattet ist und mit welchen in die auf der der mindestens einen Welle (9; 10) abgewandten sichtbaren Oberfläche (2) des plattenförmigen Elementes (1) die Nuten (4) einfräsbar sind.

## Claims

1. Method for producing a panel-shaped sound-absorbing element (1), in which the visible surface (2) of the panel-shaped element (1) is provided with grooves (4), spaced apart from one another, running substantially parallel, and recesses (5) are made in the back surface (3), which come together with the grooves (4) in the bottom of the grooves, and breakthroughs (6) are formed, **characterised in that**, to make the recesses (5), the panel-shaped element (1) is led past at least one spindle (9, 10), provided in an apparatus, which spindle is aligned substantially parallel to the surfaces (2, 3) of the panel-shaped element (1) and is equipped with disk milling tools (11) which have a mutual spacing (b) corresponding substantially to the spacing (a) of the grooves (4), which spindle (9; 10) is rotatingly driven, and, for milling out the recesses (5), limited in their longitudinal extension, a relative feed motion is carried out between spindle (9; 10) and panel-shaped element (1) until the bottom of the grooves (4) is broken through, and the slit-shaped breakthroughs (6) are thus formed.

2. Method according to claim 1, **characterised in that**, for making the recesses (5), the rotatingly driven spindle (9; 10) with the disk milling tools (11) is moved toward the panel-shaped element (1), and **in that** afterward the spindle (9; 10) is moved away from the panel-shaped element (1).

3. Method according to one of the claims 1 or 2, **characterised in that** the respective panel-shaped element (1) is led past the spindle (9; 10) stepwise, and, in each case in the standstill phase of the respective panel-shaped element (1), the spindle (9; 10) is moved toward this element, the recesses (5) are milled in, and the spindle (9; 10) is again brought into the state removed from the panel-shaped element (1).

4. Method according to one of the claims 1 or 2, **characterised in that** the respective panel-shaped element (1) is led past the spindle (9; 10) continuously, and, during the movement, the spindle (9; 10) runs substantially with the respective panel-shaped element (1), the recesses (5) are milled in, the spindle (9; 10) is brought into the state removed from the panel-shaped element (1), and is moved back again into the starting position.

5. Method according to one of the claims 1 to 4, **characterised in that** a matting made up of a sound-absorbing material is put on the back surface (3) of the sound-absorbing element (1).

6. Apparatus for carrying out the method according to one of the claims 1 to 5, **characterised in that** the panel-shaped element (1) to be machined is able to be led past the at least one spindle (9; 10) in an advance direction, **in that** the spindle (9; 10) is borne in a way rotatable substantially transverse to the advance direction of the panel-shaped element (1) and substantially parallel to its surfaces (2, 3) in at least one bearing (13), and is equipped with disk milling tools (11) which have the mutual spacing (b) corresponding to a whole number multiple of the spacing (a) of the grooves (4), and **in that** a relative feed motion is executable between spindle (9; 10) and panel-shaped element (1), and the recesses (5) are thereby able to be milled out.

7. Apparatus according to claim 6, **characterised in that** the at least one spindle (9; 10) is held on both sides in a bearing (13) in each case, which bearing (13) is displaceable, by means of a linear drive (15), substantially perpendicular to the back surface (3) of the panel-shaped element (1) toward this element and away from this element.

8. Apparatus according to claim 6, **characterised in that** the at least one spindle (9; 10) is held on both sides in a bearing (13) in each case, which bearing (13) is displaceable in advance direction and opposite thereto as well as perpendicular to the surface (3) of the panel-shaped element (1) toward this element and away from this element.

9. Apparatus according to one of the claims 6 to 8, **characterised in that** two spindles (9; 10) are provided, which, seen in advance direction, are disposed one behind the other, and **in that** the spacing (b) of the disk milling tools (11) on both spindles (9 and 10) each corresponds to double the spacing (a) of the grooves (4), and the disk milling tools (11) of the one spindle (9) are disposed offset to the disk milling tools (11) of the other spindle (10) by the spacing (a) of the grooves (4).

10. Apparatus according to one of the claims 6 to 9, **characterised in that** a further spindle (16) is provided which is equipped with further disk milling tools (17) and with which the grooves (4) are able to be milled in the visible surface, remote from the at least one spindle (9; 10), of the panel-shaped element (1).

## Revendications

1. Procédé pour la fabrication d'un élément insonorisant en forme de panneau (1) dans lequel la surface visible (2) de l'élément en forme de panneau (1) est munie de rainures (4) sensiblement parallèles entre elles et à distance les unes des autres et dans la surface supérieure arrière (3) des évidements (5) sont ménagés, lesquels les rejoignent au fond des rainures (4) formant ainsi des percées (6)), **caractérisé en ce que** pour la réalisation des évidements (5), l'élément (1) en forme de plaque est guidé au moins le long d'un arbre (9, 10) prévu dans ce dispositif, lequel est orienté sensiblement parallèlement aux surfaces (2, 3) de l'élément en forme de panneau (1) et qui est garni d'outils de fraisage à disque (11), qui présentent une distance réciproque (b) correspondant sensiblement à la distance (a) des rainures (4), lequel arbre (9, 10) est entraîné en rotation et entre l'arbre (9, 10) et l'élément en forme de panneau (1) un mouvement de réglage relative étant exécuté pour le fraisage des évidements (5) limités dans leur extension longitudinale jusqu'à ce que le fond des rainures soit transpercé et que les percées en forme de fente (6) soient formées.

2. Procédé selon la revendication 1, **caractérisé en ce que** l'arbre (9, 10) entraîné en rotation est avancé en direction de l'élément en forme de panneau (1) avec les outils de fraisage à disque (11) pour ménager les évidements (5) et **en ce que** l'arbre (9, 10) est éloigné en déplacement de l'élément en forme de panneau (1).

3. Procédé selon l'une des revendications 1 ou 2, **caractérisé en ce que** l'élément en forme de panneau (1) est amené le long de l'arbre (9, 10) progressivement et l'arbre (9, 10) est avancé respectivement dans la phase d'immobilisation de l'élément en forme de panneau correspondant (1) contre celui-ci, **en ce que** les évidements (5) sont fraisés et l'arbre (9, 10) est ramené à l'état arrêté par l'élément en forme de panneau (1).

4. Procédé selon l'une des revendications 1 ou 2, **caractérisé en ce que** l'élément en forme de panneau (1) est amené le long de l'arbre (9, 10) en continu et l'arbre (9, 10) est entraîné sensiblement avec l'élément en forme de panneau (1) correspondant pendant le réglage, **en ce que** les évidements (5) sont fraisés, **en ce que** l'arbre (9, 10) est ramené à l'état arrêté par l'élément en forme de panneau (1) et est ramené dans la position de départ.

5. Procédé selon l'une des revendications 1 à 4, **caractérisé en ce que** un tapis se composant de matériau insonorisant est appliqué sur la surface arrière (3) de l'élément insonorisant (1).

6. Dispositif pour la mise en oeuvre du procédé selon l'une des revendications 1 à 5, **caractérisé en ce que** l'élément en forme de panneau (1) à usiner peut être passé au moins le long d'un arbre (9, 10) dans un sens d'avance, **en ce que** l'arbre (9, 10) est logé sensiblement transversalement au sens d'avance de l'élément en forme de panneau (1) et sensiblement parallèlement à ses surfaces supérieures (2, 3) de manière rotative dans au moins un palier (13) et est garni d'outils de fraisage à disque (11) qui présentent un intervalle réciproque (b) qui correspond à un multiple entier de la distance (a) des rainures (4) et **en ce qu'**entre l'arbre (9, 10) et l'élément en forme de panneau (1), un mouvement relatif de réglage est exécutable qui implique ainsi le fraisage des évidements (5).

7. Dispositif selon la revendication 6, **caractérisé en ce que** au moins un arbre (9, 10) est maintenu de part et d'autre dans respectivement un palier (13), palier (13) qui est mobile au moyen d'un entraînement linéaire (15) sensiblement perpendiculairement à la surface (3) de l'élément en forme de panneau (1) en se rapprochant et en s'éloignant de celui-ci

8. Dispositif selon la revendication 6, **caractérisé en ce que** au moins un arbre (9, 10) est maintenu de part et d'autre dans respectivement un palier (13), palier (13) qui est mobile dans le sens d'avance et dans le sens opposé ainsi que perpendiculairement à la surface (3) de l'élément en forme de panneau (1) en se rapprochant et en s'éloignant de celui-ci.

9. Dispositif selon l'une des revendications 6 à 8, **caractérisé en ce qu'**il est prévu deux arbres (9, 10) qui sont disposés l'un derrière l'autre vue dans le sens d'avance et **en ce que** la distance (b) des outils de fraisage à disque (11) sur les deux arbres (9, 10) correspond respectivement au double de la distance (4a) des rainures (4) et **en ce que** les outils de fraisage à disque (11) de l'arbre (9) sont diposés en décalé par rapport aux outils de fraisage à disque (11) de l'autre arbre (10) de l'équivalent de la distance (a) des rainures (4).

10. Dispositif selon l'une des revendications 6 à 9, **caractérisé en ce qu'**il est prévu un autre arbre (16) qui est muni d'autres outils de fraisage à disque (17) et avec lesquels les rainures (4) peuvent être fraisées sur la surface visible (2) de l'élément en forme de panneau (1), surface qui est détournée au moins d'un arbre (9, 10).
